# EUROPÄISCHE PATENTSCHRIFT

(11) **EP 1 935 078 B1**
(45) Veröffentlichungstag und Bekanntmachung des Hinweises auf die Patenterteilung: **11.07.2012**
(21) Anmeldenummer: 06793384.6
(22) Anmeldetag: 11.09.2006
(51) Int. Cl.: H02K 5/167

(54) **ANTRIEBSEINHEIT MIT EINEM DREHSICHEREN LAGERELEMENT**
DRIVE UNIT WITH ROTATIONALLY FIXED BEARING ELEMENT
UNITE D'ENTRAINEMENT A ELEMENT SUPPORT BLOQUE EN ROTATION

(30) Priorität: 30.09.2005 DE 102005047444
(43) Veröffentlichungstag der Anmeldung: 25.06.2008
(73) Patentinhaber: ROBERT BOSCH GMBH, 70442 Stuttgart (DE)
(72) Erfinder: HUCK, Thomas, 77836 Rheinmuenster (DE); MILI, Tarek, 76133 Karlsruhe (DE)
(86) Internationale Anmeldenummer: PCT/EP2006/066202
(87) Internationale Veröffentlichungsnummer: WO 2007/039406

(56) Entgegenhaltungen:
- DE-A1- 1 638 213
- DE-A1- 19 541 118
- FR-A1- 2 319 994
- US-A- 3 770 331
- US-A- 3 831 048

## Beschreibung

### Stand der Technik

Die Erfindung betrifft eine Antriebseinheit, insbesondere zum Verstellen beweglicher Teile im Kraftfahrzeug, sowie ein Verfahren zum Herstellen einer solchen mit einer Antriebswelle, die mittels mindestens eines Lagerelements in einem Gehäuse gelagert ist, nach der Gattung der unabhängigen Ansprüche.

Mit der DE 10352240 A1 ist ein Elektromotor bekannt geworden, dessen Gehäuse aus zwei Halbschalen besteht, die radial zur Ankerwelle montierbar sind. Die Ankerwelle und eine weitere Getriebewelle sind hierbei mittels Lagerelementen in einer ersten Gehäuseschale eingelegt. Bei einer solchen radialen Montage der Welle werden die Lagerelemente gewöhnlich durch eine radiale Anpresskraft an einer Drehung gehindert. Die radiale Anpresskraft muss dabei so groß sein, dass die entsprechenden Reibkräfte höher sind als das Losbrechmoment des Lagerelements. Dadurch dass die Größe der Anpresskraft durch die Drehsicherung des Lagerelements vorgegeben ist, erweist sich die exakte radiale Positionierung der Welle als sehr schwierig, da diese ebenfalls stark von der Anpresskraft beeinflusst wird.

Die DE 1638213 A1 und die US 3770331 A zeigen jeweils eine Antriebseinheit mit einer Antriebswelle, die mittels eines Lagerelements in einem Gehäuse gelagert ist. Das Lagerelement ist dabei jeweils als Gleitlagerbuchse ausgebildet, die zur Drehsicherung im Gehäuse in Umfangsrichtung einen Formschluss bildet.

### Offenbarung der Erfindung

Die erfindungsgemäße Antriebseinheit und das Herstellungsverfahren mit den kennzeichnenden Merkmale der unabhängigen Ansprüche haben den Vorteil, dass durch das Anformen einer Drehsicherung an das Lagerelement dieses formschlüssig in eine entsprechende Lageraufnahme des Gehäuses eingreift. Dadurch wird ein Verdrehen des Lagerelements durch den Formschluss in Umfangsrichtung zwischen dem Lagerelement und dem Gehäuse verhindert. Somit kann die radiale Anpresskraft auf das Lagerelement völlig unabhängig von der Drehsicherung eingestellt werden. Dadurch kann die Welle sehr exakt mittels der Anpresskraft durch das zweite Gehäuseteil positioniert werden. Zur Drehsicherung des Lagerelements ist an diesem als Formschluss eine Geometrie mit einem Polygonzug als äußerem Umfang oder ein entsprechenden Außenprofil angeformt, kann hierdurch auf sehr einfache Weise ein zuverlässiger Formschluss mit der Lageraufnahme gefertigt werden. Damit bei der radialen Montage des die Welle aufnehmenden Lagerelements dieses automatisch in die richtige Drehlage kommt, weist der Drehsicherungs-Bereich eine Einführphase auf. Daran kann die formschlüssige Drehsicherung des Lagerelements entlang gleiten und durch die radiale Montagekraft derart gedreht werden, dass sie einen Formschluss mit dem Drohsicherungs-Bereich bildet.

Durch die in den Unteransprüchen aufgeführten Maßnahmen ergeben sich vorteilhafte Weiterbildungen und Verbesserungen der in den unabhängigen Ansprüchen angegebenen Merkmale. Bevorzugt ist die polygonale Geometrie beispielsweise als Vierkant ausgebildet, der in eine entsprechende U-förmige Aussparung der Lageraufnahme greift. Durch diesen Formschluss kann auf zusätzliche Sicherungselemente, wie Spann- oder Klemmscheiben, komplett verzichtet werden, wodurch die Antriebseinheit schneller und kostengünstiger gefertigt werden kann. Durch die einstückige Ausbildung der Gleitlagerbuchse mit der polygonalen Geometrie entsteht bei der Fertigung des Lagerelements kein Mehraufwand.

Wird die formschlüssige Drehsicherung an dem Lagerelement an dessen axialen Enden angeformt, wird dadurch die Aufnahme der Gleitlagerbuchse in der Lageraufnahme des Gehäuses nicht gestört. In Abhängigkeit der auf das Lagerelement einwirkenden Momente kann an der Gleitlagerbuchse an einem oder an beiden axialen Enden eine polygonale Geometrie angeformt werden.

Von Vorteil ist es, wenn das Lagerelement als Kalottenlager ausgebildet ist, da dieses radiale Kräfte aus verschiedenen Richtungen aufnehmen kann und die Auslenkung der Antriebswelle bei der Montage und im Betrieb ausgleicht. Durch die Verwendung von Sintermaterial, das ein Schmiermittel aufnehmen kann, ist die Welle für die gesamte Lebensdauer gut gleitend gelagert.

Damit die Funktion der Kalotte nicht beeinträchtigt wird, und diese weiterhin Auslenkungen der Antriebswelle ausgleichen kann, ist der äußere Durchmesser der formschlüssigen Drehsicherung kleiner ausgebildet als der minimale äußere Durchmesser der Kalotte. Dadurch kann die Verdrehsicherheit des Lagerelements entkoppelt werden von der eigentlichen Funktion der Wellenlagerung.

Zur Aufnahme der polygonalen Geometrie weist die Lageraufnahme einen Drehsicherungs-Bereich auf, in den die Drehsicherung formschlüssig einfügbar ist. Der Drehsicherungs-Bereich kann sehr günstig zusammen mit der Lageraufnahme direkt einstückig mit dem unteren Gehäuseteil ausgebildet werden, das beispielsweise mittels Kunststoff-Spritzgussverfahren hergestellt werden kann.

Damit das Lagerelement bei dessen Montage sehr einfach in die korrespondierende Lageraufnahme eingefügt werden kann, liegt die polygonale Geometrie im fertig montiertem Zustand nur mit genau zwei Flächen oder Kanten je Drehsicherung am Drehsicherungs-Bereich der Lageraufnahme an, wobei die beiden Rächen einen Winkel miteinander bilden, in den formschlüssig zwei entsprechenden Gegenflächen des Drehsicherungs-Bereichs eingreifen. Bevorzugt ist die polygonale Geometrie als Vierkant ausgebildet, der dann an zwei Gegenfläche des Drehsicherungs-Bereichs anliegt, die miteinander einen Winkel von ca. 90° bilden.

Ist die Lageraufnahme direkt im unteren Gehäuseteil ausgeformt, kann das Lagerelement in einfacher Weise bei der Montage des zweiten Gehäuseteils in die Lageraufnahme eingepresst werden. Hierzu kann im zweiten Gehäuseteil beispielsweise einstückig ein Fortsatz angeformt werden, der in montiertem Zustand direkt an der Kalotte anliegt.

Durch das erfindungsgemäße Herstellungsverfahren der Antriebseinheit kann das Lagerelement ohne zusätzliche Bauteile in einem Montageprozess zuverlässig radial fixiert und gleichzeitig gegen ein Verdrehen gesichert werden. Durch die selbstfindende Drehsicherung wird das Lagerelement automatisch bei dessen korrekter radialer Positionierung gegen ein Verdrehen gesichert.

Bei der Montage des Lagerelements kann dabei die Anpresskraft zu dessen radialer Positionierung völlig unabhängig von Reibkräften an der Oberfläche des Lagerelements eingestellt werden, die gemäß dem Stand der Technik ein Verdrehen des Lagerelements verhindern sollen.

### Zeichnungen

In der Zeichnung ist ein Ausführungsbeispiel der erfindungsgemäßen Vorrichtung dargestellt und in der nachfolgenden Beschreibung näher erläutert. Es zeigen:
- Figur 1: eine Ansicht der Antriebseinheit vor dessen Montage und
- Figur 2: einen Schnitt durch eine fertig montierte Antriebseinheit.

### - Beschreibung des Ausführungsbeispiels

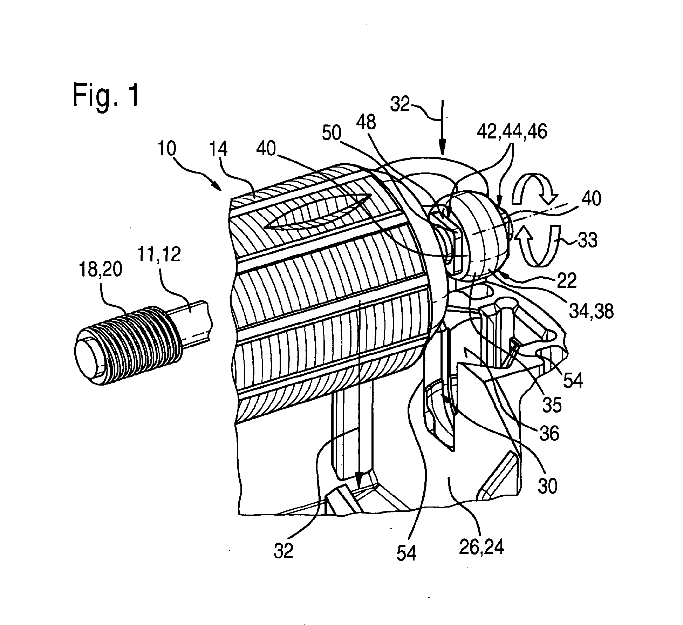

In Figur 1 ist als Antriebseinheit 10 ein Elektromotor 10 dargestellt, bei dem eine Ankerwelle 11 als Antriebswelle 12 ausgebildet ist. Die Antriebswelle 12 wird über einen auf dieser gelagerten Anker 14 angetrieben und überträgt mittels eines Abtriebselements 16, das beispielsweise als Schnecke 20 ausgebildet ist, ein Drehmoment an ein nicht näher dargestelltes bewegliches Teil im Kraftfahrzeug. Die Antriebswelle 12 ist mittels Lagerelementen 22 in einem Gehäuse 24 gelagert, das ein unteres Gehäuseteil 26 und ein oberes Gehäuseteil 28 aufweist. Im unteren Gehäuseteil 26, das beispielsweise aus Kunststoff hergestellt ist, ist eine Lageraufnahme 30 ausgeformt, in die das Lagerelement 22 in radialer Richtung 32 zur Antriebswelle 12 eingesetzt werden kann. Das Lagerelement 22 weist eine Kalotte 34 auf, deren gewölbte Oberfläche 35 an einer Innenwand 36 der Lageraufnahme 30 zum Anliegen kommt. Die Kalotte 34 ist als Gleitlagerbuchse 38 beispielsweise aus einem Sintermaterial gebildet, die die Antriebswelle 12 drehbar aufnimmt. An den axialen Enden 40 der Gleitlagerhülse 38 ist eine formschlüssige Drehsicherung 42 angeordnet, die als polygone Geometrie 44 ausgebildet ist. Die polygone Geometrie 44 ist in diesem Ausführungsbeispiel als Vierkant 46 ausgebildet, bei dem vier Flächen 48 näherungsweise unter einem Winkel von ca. 90° zueinander angeordnet sind. Die Flächen 48 sind über einen Radius 51 miteinander verbunden, der das Einführen des Lagerelements 22 in die Lageraufnahme 30 erleichtert. Dabei ist der maximale Durchmesser 50 der formschlüssigen Drehsicherung 42 kleiner als der minimale Außendurchmesser 52 der Gleitlagerhülse 38. Die Lageraufnahme 30 weist einen Drehsicherungs-Bereich 54 auf, in den nach der Montage des Lagerelements 22 dessen Drehsicherung 42 formschlüssig eingreift. Der Drehsicherungs-Bereich 54 weist Gegenflächen 49 auf, an denen nach der Montage des Lagerelements 22 die Flächen 48 der polygonen Geometrie 44 anliegen.

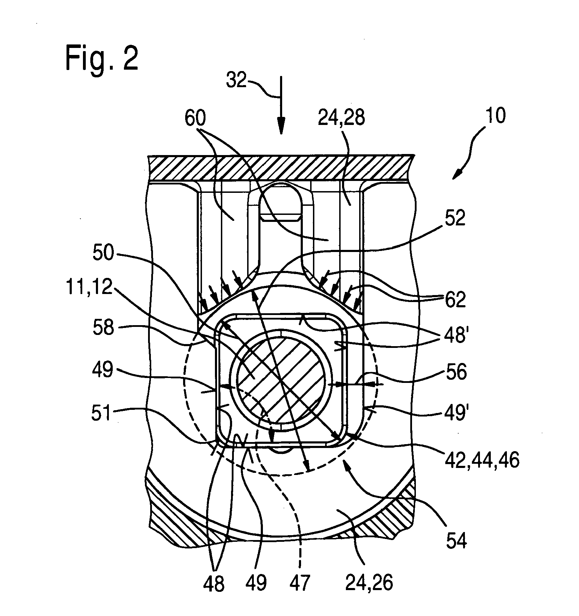

In Figur 2 ist die Antriebseinheit 10 in fertig montiertem Zustand dargestellt, sodass die Drehsicherung 42 des Lagerelements 22 einen Formschluss mit dem Drehsicherungs-Bereich 54 der Lageraufnahme 30 bildet. Hierbei liegen beispielsweise nur genau zwei benachbarte Flächen 48 an korrespondierenden Gegenflächen 49 an. Beim Beispiel eines Vierkants 46 bilden die Flächen 48 und die Gegenflächen 49 jeweils etwa einen Winkel 47 von ca. 90°. Die dritte und vierte Fläche 48' des Vierkants 46 liegen hierbei an keiner Gegenfläche 49 an, sondern haben einen Abstand 56 zur Gegenfläche 49', um das Einfädeln der Drehsicherung 42 in den Drehsicherungs-Bereich 54 zu erleichtern. Zu diesem Zweck weist der Drehsicherungs-Bereich 54 auch einer Einführungsphase 58 auf, an der entlang die polygone Geometrie 44 zur Bildung eines Formschlusses in den Drehsicherungs-Bereich 54 gleitet. Die Gleitlagerhülse 38 wird von einem Fortsatz 60 des oberen Gehäuseteils 28 gegen die Innenwand 36 der Lageraufnahme 30 gepresst.

Zur Montage der Antriebseinheit 10 wird das Lagerelement 22 zuerst auf die Antriebswelle 12 aufgeschoben und mit dieser in radialer Richtung 32 in die Lageraufnahme 30 des unteren Gehäuseteils 26 eingesetzt. Dabei liegt die Oberfläche 35 der Gleitlagerhülse 38 an der entsprechenden Innenfläche 36 der Lageraufnahme 30 an. Beim Einführen der formschlüssigen Drehsicherung 42 gleitet diese auf der Einführphase 58 in den Drehsicherungs-Bereich 54 hinein. Sind die Flächen 48 beim Einführen nicht parallel zu den Gegenflächen 49 ausgerichtet, so dreht sich die Drehsicherung 42 mit der Gleitlagerhülse 38 in Umfangsrichtung 33, bis die Flächen 48, 49 näherungsweise parallel ausgerichtet sind und das Lagerelement 22 vollständig in die Aufnahme 30 eingeführt ist. Die beiden den Winkel 47 umschließenden Flächen 48 und die korrespondierenden Gegenflächen 49 sind bezüglich der Antriebswelle 12 dabei derart angeordnet, dass sie bei vollständig eingedrücktem Lagerelement 22 einen Formschluss bilden. Aufgrund des Abstands 56 zwischen der Fläche 48' und der Gegenfläche 49' wird ein Verkanten der Drehsicherung 42 beim Einführen vermieden. Somit ist für das sichere Auffinden der Drehlage der polygonen Geometrie 44 kein zusätzlicher Montageschritt notwendig. Anschließend wird das obere Gehäuseteil 28 auf das untere Gehäuseteil 26 aufgesetzt und mit diesem verbunden, wodurch der Fortsatz 60 eine Anpresskraft 62 auf die Gleitlagerhülse 38, insbesondere auf die Kalotte 34, ausübt und diese zur radialen Positionierung der Antriebswelle 12 in die Lageraufnahme 30 presst.

Es sei angemerkt, dass hinsichtlich der in den Figuren und in der Beschreibung dargestellten Ausführungsbeispiele vielfältige Kombinationsmöglichkeiten der einzelnen Merkmale untereinander möglich sind. So kann beispielsweise die konkrete Ausformung der formschlüssigen Drehsicherung 42 variiert werden, indem die polygone Geometrie 44 beispielsweise als Dreikant, Fünfkant oder Sechskant ausgebildet wird. Die Drehsicherung 42 kann aber auch einen gewölbten Umfang, beispielsweise ein Oval aufweisen, das ebenfalls einen Formschluss mit dem entsprechenden Drehsicherungs-Bereich 54 bildet. Die Flächen 48 mit den entsprechenden Gegenflächen 49 müssen nicht als ausgedehnte Flächen ausgebildet sein, sondern können beispielsweise auch durch Kanten ersetzt werden. Der Formschluss wird vorzugsweise durch zwei Flächen 48 gebildet, die im Winkel 47 von ca. 90° zueinander angeordnet sind. Es können jedoch auch mehr als zwei Flächen 48 mit unterschiedlichen Winkeln 47 einen Formschluss mit den entsprechenden Gegenflächen 49 des Drehsicherungs-Bereichs 54 bilden. Die Erfindung ist nicht auf die Verwendung von Kalottenlagern 34 beschränkt, sondern kann auch für andere Gleitlager oder Wälzlager angewendet werden.

## Patentansprüche

1. Antriebseinheit (10), insbesondere zum Verstellen beweglicher Teile im Kraftfahrzeug, mit einer Antriebswelle (12), die mittels mindestens einem Lagerelement (22) in einem Gehäuse (24) gelagert ist, das ein unteres Gehäuseteil (26) und ein oberes Gehäuseteil (28) aufweist, die radial zur Antriebswelle (12) zusammenfügbar sind, wobei das Lagerelement (22) als Gleiltlagerbuchse (38) ausgebildet ist, die zur Bindung einer Drehsicherung (42) in Umfangsrichtung (33) formschlüssig in eine entsprechende Lageraufnahme (30) des Gehäuses (24) eingreift, wobei die Drehsicherung (42) als eine polygonale Geometrie (44) ausgebildet ist, und die Lageraufnahme (30) einen Drehsicherungs-Bereich (54) aufweist, der mit dem Umfang der polygonalen Geometrie (44) einen Formschluss bildet, **dadurch gekennzeichnet, dass** die Lageraufnahme (30) im Drehsicherungs-Bereich (52) eine Einführfase (58) aufweist, die die polygonale Geometrie (44) bei der Montage des Lagerelements (22) selbstausrichtend in den Drehsicherungs Bereich (54) gleiten lässt.

2. Antriebseinheit (10) nach Anspruch 1, **dadurch gekennzeichnet, dass** die eine polygonale Geometrie (44) einstückig an der Gleidagerbuchse (38) angeformt ist, und insbesondere als Vierkant (46) ausgebildet ist

3. Antriebseinheit (10) nach einem der Ansprüche 1 oder 2, **dadurch gekennzeichnet, dass** die formschlüssige Drehsicherung (42) an einem oder beiden axialen Enden (40) der Gleitlagerbuchse (38) angeordnet ist.

4. Antriebseinheit (10) nach einem der vorhergehenden Ansprüche, **dadurch gekennzeichnet, dass** das Lagerelement (22) als Kalotte (34) ausgebildet ist, die insbesondere aus Sintermaterial gefertigt ist.

5. Antriebseinheit (10) nach einem der vorhergehenden Ansprüche, **dadurch gekennzeichnet, dass** die Kalotte (34) über deren gesamter axialen Ausdehnung einen größeren Durchmesser (52) aufweist, als der maximale Durchmesser (50) der polygonalen Geometrie (44) der Drehsicherung (42).

6. Antriebseinheit (10) nach einem der vorhergehenden Ansprüche, **dadurch gekennzeichnet, dass** ein maximaler Durchmesser (60) der formschlüssigen Drehsicherung (42) kleiner ist, als ein minimaler Außendurchmesser (52) der Gleitlagerbuchse (38)

7. Antriebseinheit (10) nach einem der vorhergehenden Ansprüche, **dadurch gekennzeichnet, dass** die polygonale Geometrie (44) nur mit zwei Flächen (48) an zwei entsprechenden Gegenflächen (49) des Drehsicherungs-Bereich (54) anliegt, wobei die beiden Flächen (48) insbesondere einen Winkel (47) von etwa 90° umschließen.

8. Antriebseinheit (10) nach einem der vorhergehenden Ansprüche, **dadurch gekennzeichnet, dass** die Lageraufnahme (30) als Aussparung (30) im unteren Gehäuseteil (26) ausgebildet ist, in die das Lagerelement (22) durch einem Fortsatz (60) des zweiten Gehäuseteils (28) eingedrückt wird.

9. Verfahren zum Herstellen einer Antriebseinheit (10), nach einem der Ansprüche 1 bis 8 , mit mindestens einem unteren Gehäuseteil (26) und einem oberen Gehäuseteil (28), und einer Antriebswelle (12), die mittels mindestens einem Lagerelement (22) in den Gehäuseteilen (26, 28) gelagert ist, **gekennzeichnet durch** folgende Montageschritte:
- das mindestens eine Lagerelement (22) wird auf die Antriebswelle (12) aufgeschoben
- das Lagerelement (22) wird mit der Antriebswelle (12) radial zu dieser in eine Lageraufnahme (30) des unteren Gehäuseteils (26) eingesetzt
- aufgrund der Ausformung der Lageraufnahme (30) dreht sich das Lagerelement (22) beim radialen Einfügen derart, dass eine am Lagerelement (22) angeformte Drehsicherung (42) formschlüssig mit ihrem Umfang an einem entsprechenden Drehsicherungs- Bereich (54) der Lageraufnahme (30) anliegt
- das obere Gehäuseteil (28) wird radial auf das untere Gehäuseteil (26) aufgesetzt und mit diesem verbunden, wobei ein am oberen Gehäuseteil (28) angeordneter radialer Fortsatz (60) das Lagerelement (22) in die Lageraufnahme (30) presst, um die Antriebswelle (12) exakt zu positionieren.

10. Verfahren nach Anspruch 9, **dadurch gekennzeichnet, dass** die Funktion des Verdrehschutzes unabhängig erfolgt von der Anpresskraft (62), die auf eine Kalotte (34) des Lagerelements (22) ausgeübt wird.

## Claims

1. Drive unit (10), in particular for the adjustment of movable parts in the motor vehicle, with a drive shaft (12) which is mounted by means of at least one bearing element (22) in a housing (24) which has a lower housing part (26) and an upper housing part (28) which can be joined together radially with respect to the drive shaft (12), the bearing element (22) being designed as a plain bearing bush (38) which, to form an anti-rotation device (42) in the circumferential direction (33), engages positively into a corresponding bearing receptacle (30) of the housing (24), the anti-rotation device (42) being designed as polygonal geometry (44), and the bearing receptacle (30) having an anti-rotation region (54) which makes a form fit with the circumference of the polygonal geometry (44), **characterized in that** the bearing receptacle (30) has in the anti-rotational region (54) an introduction chamfer (58) which, when the bearing element (22) is being mounted, enables the polygonal geometry (44) to slide into the anti-rotational region (54) in a self-aligning manner.

2. Drive unit (10) according to Claim 1, **characterized in that** the polygonal geometry (44) is formed in one piece on the plain bearing bush (38) and, in particular, is deigned as a square (46).

3. Drive unit (10) according to either one of Claims 1 and 2, **characterized in that** the positive anti-rotation device (42) is arranged at one or at both axial ends (40) of the plain bearing bush (38).

4. Drive unit (10) according to one of the preceding claims, **characterized in that** the bearing element (22) is designed as a spherical cap (34) which is manufactured, in particular, from sintered material.

5. Drive unit (10) according to one of the preceding claims, **characterized in that** the spherical cap (34) has over its entire axial extent a larger diameter (52) than the maximum diameter (50) of the polygonal geometry (44) of the anti-rotation device (42).

6. Drive unit (10) according to one of the preceding claims, **characterized in that** a maximum diameter (50) of the positive anti-rotation device (42) is smaller than a minimum outside diameter (52) of the plain bearing bush (38).

7. Drive unit (10) according to one of the preceding claims, **characterized in that** the polygonal geometry (44) bears only with two faces (48) against two corresponding counter faces (49) of the anti-rotation region (54), the two faces (48) forming, in particular, an angle (47) of about 90°.

8. Drive unit (10) according to one of the preceding claims, **characterized in that** the bearing receptacle (30) is designed as a clearance (30) in the lower housing part (26), into which clearance the bearing element (22) is pressed by an extension (60) of the second housing part (28).

9. Method for producing a drive unit (10) according to one of Claims 1 to 8, with at least one lower housing part (26) and one upper housing part (28) and with a drive shaft (12) which is mounted in the housing parts (26, 28) by means of at least one bearing element (22), **characterized by** the following mounting steps:
- the at least one bearing element (22) is pushed onto the drive shaft (12)
- the bearing element (22) is inserted, together with the drive shaft (12), radially with respect to the latter into a bearing receptacle (30) of the lower housing part (26)
- by virtue of the shape of the bearing receptacle (30), the bearing element (22), when being inserted radially, rotates in such a way that an anti-rotation device (42) integrally formed on the bearing element (22) bears positively with its circumference against a corresponding anti-rotation region (54) of the bearing receptacle (30)
- the upper housing part (28) is placed radially onto the lower housing part (26) and connected to the latter, a radial extension (60) arranged on the upper housing part (28) pressing the bearing element (22) into the bearing receptacle (30) in order to position the drive shaft (12) exactly.

10. Method according to Claim 9, **characterized in that** the anti-rotation function takes place independently of the pressure force (62) which is exerted upon a spherical cap (34) of the bearing element (22).

## Revendications

1. Unité d'entraînement (10), en particulier pour déplacer des parties mobiles dans un véhicule automobile, comprenant un arbre d'entraînement (12) qui est monté, au moyen d'au moins un élément de palier (22), dans un boîtier (24) qui comprend une partie inférieure de boîtier (26) et une partie supérieure de boîtier (28) qui peuvent être assemblées radialement par rapport à l'arbre d'entraînement (12), l'élément de palier (22) étant réalisé sous forme de douille de palier lisse (38) qui vient en prise par engagement par correspondance géométrique dans un logement de palier (30) correspondant du boîtier (24) pour former une fixation anti-rotation (42) dans la direction périphérique (33), la fixation anti-rotation (42) étant réalisée sous forme de géométrie polygonale (44) et le logement de palier (30) comprenant une région de fixation anti-rotation (54) qui forme un engagement par correspondance géométrique avec la périphérie de la géométrie polygonale (44), **caractérisée en ce que** le logement de palier (30) comprend un biseau d'insertion (58) dans la région de fixation anti-rotation (54), lequel biseau d'insertion permet à la géométrie polygonale (44) de glisser dans la région de fixation anti-rotation (54) de manière à s'aligner automatiquement lors du montage de l'élément de palier (22).

2. Unité d'entraînement (10) selon la revendication 1, **caractérisée en ce que** la géométrie polygonale (44) est formée d'un seul tenant sur la douille de palier lisse (38), et est en particulier réalisée en tant que carré (46).

3. Unité d'entraînement (10) selon la revendication 1 ou 2, **caractérisée en ce que** la fixation anti-rotation (42) à engagement par correspondance géométrique est disposée à une ou aux deux extrémités axiales (40) de la douille de palier lisse (38).

4. Unité d'entraînement (10) selon l'une quelconque des revendications précédentes, **caractérisée en ce que** l'élément de palier (22) est réalisé sous forme de calotte (34) qui est fabriquée en particulier en un matériau fritté.

5. Unité d'entraînement (10) selon l'une quelconque des revendications précédentes, **caractérisée en ce que** la calotte (34) possède, sur toute son étendue axiale, un plus grand diamètre (52) que le diamètre maximal (50) de la géométrie polygonale (44) de la fixation anti-rotation (42).

6. Unité d'entraînement (10) selon l'une quelconque des revendications précédentes, **caractérisée en ce qu'**un diamètre maximal (50) de la fixation anti-rotation (42) à engagement par correspondance géométrique est inférieur à un diamètre extérieur minimal (52) de la douille de palier lisse (38).

7. Unité d'entraînement (10) selon l'une quelconque des revendications précédentes, **caractérisée en ce que** la géométrie polygonale (44) s'applique seulement par l'intermédiaire de deux surfaces (48) contre deux surfaces conjuguées correspondantes (49) de la région de fixation anti-rotation (54), les deux surfaces (48) formant en particulier un angle (47) d'environ 90°.

8. Unité d'entraînement (10) selon l'une quelconque des revendications précédentes, **caractérisée en ce que** le logement de palier (30) est réalisé en tant qu'évidement (30) dans la partie inférieure de boîtier (26) dans laquelle l'élément de palier (22) est enfoncé par un prolongement (60) de la deuxième partie de boîtier (28).

9. Procédé de fabrication d'une unité d'entraînement (10) selon l'une quelconque des revendications 1 à 8, comprenant au moins une partie inférieure de boîtier (26) et une partie supérieure de boîtier (28), et un arbre d'entraînement (12) qui est monté dans les parties de boîtier (26, 28) au moyen d'au moins un élément de palier (22), **caractérisé par** les étapes de montage suivantes .
- l'au moins un élément de palier (22) est enfilé sur l'arbre d'entraînement (12),
- l'élément de palier (22) est inséré avec l'arbre d'entraînement (12), et radialement par rapport à ce dernier, dans un logement de palier (30) de la partie inférieure de boîtier (26),
- en raison de la forme du logement de palier (30), l'élément de palier (22) tourne lors de l'insertion radiale de telle sorte qu'une fixation anti-rotation (42) formée sur l'élément de palier (22) s'applique par engagement par correspondance géométrique par l'intermédiaire de sa périphérie contre une région de fixation anti-rotation (54) correspondante du logement de palier (30),
- la partie supérieure de boîtier (28) est placée radialement sur la partie inférieure de boîtier (26) et reliée à cette dernière, un prolongement (60) radial disposé sur la partie supérieure de boîtier (28) pressant l'élément de palier (22) dans le logement de palier (30) afin de positionner de manière précise l'arbre d'entraînement (12).

10. Procédé selon la revendication 9, **caractérisé en ce que** la fonction de la protection contre la rotation s'effectue indépendamment de la force de pression (62) qui est exercée sur une calotte (34) de l'élément de palier (22).
